# EUROPÄISCHE PATENTSCHRIFT

(11) **EP 2 315 045 B1**
(45) Veröffentlichungstag und Bekanntmachung des Hinweises auf die Patenterteilung: **01.08.2012**
(21) Anmeldenummer: 09173841.9
(22) Anmeldetag: 22.10.2009
(51) Int. Cl.: G01S 7/292, G01S 7/487, G01S 13/10, G01S 17/10, G01F 23/284

(54) **Messung von Entfernungen oder Entfernungsänderungen**
Measurement of distances or changes in distances
Mesure des éloignements ou des modifications d'éloignement

(43) Veröffentlichungstag der Anmeldung: 27.04.2011
(73) Patentinhaber: SICK AG, 79183 Waldkirch (DE)
(72) Erfinder: Hug, Gottfried, 79183 Waldkirch (DE); Heizmann, Reinhard, 79286 Glottertal (DE)
(74) Vertreter: Hehl, Ulrich

(56) Entgegenhaltungen:
- EP-A1- 2 088 453
- WO-A1-2004/036155
- DE-A1- 10 153 742
- DE-A1-102007 013 714
- DE-A1-102007 035 691

## Beschreibung

Die Erfindung betrifft einen Sensor und ein Verfahren zur Messung von Entfernungen oder Entfernungsänderungen nach dem Signallaufzeitprinzip nach dem Oberbegriff von Anspruch 1 beziehungsweise 12.

Zahlreiche Sensoren nutzen ein Signallaufzeitprinzip, bei dem das Zeitintervall zwischen Senden und Empfang eines Signals über die Signallaufzeit in eine Entfernung umgerechnet wird. Dabei werden so verschiedene Frequenzbereiche des elektromagnetischen Spektrums ausgenutzt wie Mikrowellen und Licht.

Bei optoelektronischen Sensoren nach dem Prinzip des Lichtlaufzeitverfahrens wird bei einem Pulslaufzeitverfahren ein kurzer Lichtpuls ausgesendet und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist. Aufgrund von Augenschutzbedingungen sind die zuletzt genannten Phasenmodulationsverfahren gerade bei gering remittierenden Targets wegen der erforderlichen großen Integrationszeiten weniger geeignet. Beim Pulsverfahren lässt sich die integrale Leistung dahingehend gewinnbringend nutzen, dass kurze Pulse mit hoher Energiedichte gesendet werden können und das Signal-Rauschverhältnis somit für den Einzelschuss verbessert wird.

Optoelektronische Entfernungsmessung kann beispielsweise in der Fahrzeugsicherheit, der Logistik- oder Fabrikäüfomatisierung oder der Sicherheitstechnik benötigt werden. Insbesondere kann ein Entfernungsmesser, der auf einem reflektierten Lichtstrahl basiert, auf eine Entfernungsänderung des Reflektors oder des reflektierenden oder remittierenden Ziels reagieren. Eine besondere Anwendung ist eine Reflexionslichtschranke, bei welcher der Abstand zwischen Lichtsender und Reflektor überwacht wird. Das Lichtlaufzeitverfahren ist auch das Prinzip, nach dem entfernungsmessende Laserscanner arbeiten, deren Fahrstrahl eine Linie oder sogar eine Fläche ausmisst.

Ein Anwendungsbereich für Mikrowellen ist die Füllstandsmessung. Hierbei wird die Signallaufzeit bis zur Reflexion an einer Grenzfläche des Mediums bestimmt, dessen Füllstand zu messen ist. Dabei werden die abgestrahlten Mikrowellen in einer Sonde geführt (TDR, time domain reflectometry), oder alternativ wie bei einem Radar frei abgestrahlt und von der Grenzfläche reflektiert.

Soll die Auflösung der Entfernungsmessung eine Genauigkeit im Bereich einiger zehn Millimeter erreichen, so muss die Signallaufzeit in einer Größenordnung von hundert Pikosekunden genau bestimmt werden. Um eine Distanzauflösung von einem Millimeter zu erreichen, müssen sechs Pikosekunden messtechnisch erfasst werden. Eine derartige Präzision ist mit herkömmlichen Systemen nur mit sehr kostenintensiver Elektronik realisierbar. Kostengünstigere Bausteine wie FPGAs (Field Programmable Gate Array) und andere programmierbare digitale Logikbausteine haben typischerweise Arbeitsfrequenzen im Bereich einiger hundert MHz. Damit lassen sich Nanosekunden, nicht aber Pikosekunden auflösen.

Für hohe zeitliche Präzision ist daher erforderlich, Genauigkeiten unterhalb dieser Arbeitsfrequenzen zu erreichen. Da es für eine Signallaufzeitmessung auf die relative, nicht die absolute Lage zwischen Sendezeitpunkt und Abtastung des Empfangssignals ankommt, ist höhere Auflösung durch Verschiebung des Sendezeitpunkts oder des Empfangszeitpunkts erreichbar.

Eine andere Schwierigkeit ist das Signal-Rauschverhältnis. Die Energie eines einzelnen reflektierten Signalpulses reicht außer bei kürzesten Entfernungen und hochreflexiven Zielen typischerweise bei weitem nicht aus, sich signifikant und verlässlich bestimmbar aus dem Rauschhintergrund abzuheben. In entfernungsmessenden Laserscannern beispielsweise wird dieses Problem dadurch gelöst, dass sehr starke Pulse ausgesandt werden. Hierfür sind aber kostentreibende Hochleistungslaser mit zumindest mehreren Watt Ausgangsleistung sowie Avalanche-Photodioden erforderlich.

In der DE 10 2007 013 714 A1 wird deshalb vorgeschlagen, eine Vielzahl von Einzelmessungen in einem Histogramm zu sammeln und gemeinsam auszuwerten. Da aber die zeitliche Auflösung des Histogramms begrenzt ist, wird zur Erhöhung der Messgenauigkeit nach der DE 10 2007 013 714 A1 das Messfenster nach Auswertung einer Vielzahl von Histogrammen durch Wahl einer passenden Sendeverzögerung auf einen bestimmten Übergangspunkt geschoben. Dieses Verfahren ist zeitintensiv und führt zu einer langsamen Messfrequenz. Es ist ferner aus der DE 10 2007 013 714 A1 bekannt, Lichtpulse mit Verzögerungen auszusenden, die Abweichungen um die definierte Verzögerung herum aufweisen und nur im Mittelwert der definierten Verzögerung entsprechen. Das erhöht aber nicht die Messgenauigkeit, sondern dient nur dazu, Ungenauigkeiten der Verzögerungsschaltung auszugleichen, d.h. insgesamt die zeitliche Zuordnung von Messereignissen in das Histogramm zu verbessern.

Aus der EP 2 088 453 A1 ist ein optoelektronischer Sensor zur Entfernungsmessung nach dem Lichtlaufzeitprinzip bekannt. Dabei erfolgt zur Auflösungserhöhung eine Parallelabtastung mit Hilfe von Verzögerungspfaden. Der Verlauf des Empfangssignals wird durch Mittelung über eine von Sendepulsen aufgezeichnet und der Empfangszeitpunkt aus dem gemittelten Signal interpoliert. Um einen Jitter der Verzögerungspfade auszugleichen, werden die Sendepuls zyklisch zueinander zeitversetzt, so dass das gemittelte Signal an seinen durch die Parallelabtastung vorgegebenen Stützpunkten Beiträge aus allen Verzögerungspfaden enthält.

Eine Verbesserung der Auflösung durch Bausteine mit höheren Abtastraten ist zwar denkbar. Da eine Entfernungsauflösung von 150mm einer zeitlichen Auflösung von 1 ns entspricht, werden aber zumindest in absehbarer Zukunft keine kostengünstigen Bausteine verfügbar sein, welche die zeitlichen Anforderungen für eine Millimeterauflösung mitbringen.

Es ist daher Aufgabe der Erfindung, eine Entfernungsmessung mit verbesserter Messgeschwindigkeit und Messgenauigkeit anzugeben.

Diese Aufgabe wird durch einen Sensor gemäß Anspruch 1 und ein Verfahren gemäß Anspruch 12 zur Messung von Entfernungen oder Entfernungsänderungen gelöst. Dabei geht die Lösung von dem Grundgedanken aus, die Messinformation aus dem Empfangssignal einer Vielzahl von Einzelsignale in einem Histogramm zu sammeln, also die Ereignisse (Counts) zu zählen, die in jeweils einen bestimmten zeitlichen Bereich (Bin) fallen. Aus dem Histogramm selbst wird ein Entfernungswert ohne Einbeziehung der Ergebnisse aus früheren Messungen bestimmt. Um die zeitliche Genauigkeit zu erhöhen, wird die Messinformation in dem Histogramm interpoliert. Wenn das Histogramm gesättigt ist, bringt eine Interpolation aber kaum Gewinn, weil beispielsweise um den Empfangszeitpunkt die Anzahl der Ereignisse von einem Bin auf das nächste von einem Maximum auf ein Minimum springt. Die Messgenauigkeit ist dann auf die relativ geringe zeitliche Auflösung des Histogramms begrenzt, welche durch die Binbreite gegeben ist, die wiederum bestenfalls einer Abtastperiode entspricht. Deshalb ist erfindungsgemäß vorgesehen, die Flanke in dem Histogramm um den Empfangszeitpunkt herum aufzuspreizen, so dass sie sich auf eine größere Zahl von Bins verteilt. Das wird erreicht, indem die Einzelsignale mit einer zeitlichen Verteilung ausgesandt werden, so dass der Empfangszeitpunkt gezielt in verschiedenen Bins des Histogramms zu liegen kommt. Die so gespreizte Flanke schafft die Voraussetzung, mittels Interpolation die gewünschte Verbesserung in der Messgenauigkeit erreichen zu können, also eine Subsample-Auflösung zu erreichen.

Die Erfindung hat den Vorteil, dass eine hochpräzise Entfernungsbestimmung bei hoher Messfrequenz ermöglicht ist. Gleichzeitig kann auf kostentreibende Elemente verzichtet werden, wie Hochleistungslaser oder Avalanche-Photodioden. Aufgrund der statistischen Auswertung sind Entfernungen auch bei einem Signal-Rausch-Verhältnis schlechter als Eins sicher messbar.

Der Empfangszeitpunkt wird beispielsweise variiert, indem gegenüber einem beliebigen, aber definierten Bezugspunkt wie dem Beginn einer Messperiode die Sendezeitpunkte gemäß der Verteilung variieren. Der zu dem Empfangszeitpunkt gehörige Beitrag zu dem Histogramm liegt dann aufgrund der Verteilung der Sendezeitpunkte in unterschiedlichen Bins. Der für die Interpolation interessante Zeitbereich um den Empfangszeitpunkt herum wird dadurch zeitlich gespreizt.

Die Verteilung ist bevorzugt flach oder gaussisch. Die Verteilung gibt an, wie oft zur Bestimmung eines Histogramms ein Einzelsignal mit einer bestimmten Sendezeitverzögerung ausgesandt werden soll. Sie ist beispielsweise als Tabelle hinterlegt, deren Einträge für diskrete Schritte von einer minimalen Verzögerung bis zu einer maximalen Verzögerung die Häufigkeit der zugehörigen Einzelsignale angibt. Die diskreten Schritte sind vorteilhafterweise kleiner als die Abtastperiode, da die erreichbare Auflösungsverbesserung mit dieser Schrittgröße zusammenhängt und die Sendezeitpunkte auch nicht an die Abtastrate des Empfangssignals gebunden sind. Bei einer flachen Verteilung sind alle Tabelleneinträge Eins oder zumindest konstant. Eine gaussische Verteilung bildet entsprechend eine Gausskurve diskret nach. Verteilungen können durch mehrfache Anwendung quasi gestapelt werden, um die Statistik zu erhöhen. Das ist gleichbedeutend damit, die Tabelleneinträge mit einem Faktor heraufzuskalieren.

Die Breite der Verteilung beträgt dabei bevorzugt ein Vielfaches der zeitlichen Auflösung des Histogramms. Als Vielfaches kommt insbesondere das doppelte bis fünffache der Auflösung des Histogramms in Betracht. So umfasst die maßgebliche Umgebung des Empfangszeitpunkts in dem Histogramm zwei bis fünf oder auch noch mehr Bins, die in die Interpolation einbezogen werden. Unter der Breite der Verteilung wird die Zeitdifferenz zwischen kleinster und größter verwendeter Sendezeitverzögerung verstanden. Auch eine diskrete Gaussverteilung hat in diesem Sinne eine feste Breite.

Die Interpolation erfolgt bevorzugt anhand eines Funktionsfits mit einem erwarteten Signalverlauf in der Umgebung des Empfangszeitpunkts, insbesondere durch lineare Regressionsanalyse. Der Verlauf in dem Histogramm in der Nähe des Empfangszeitpunkts ist vorab bekannt. Bei Verwendung einer flachen Verteilung und bei starken Pegeln des Empfangssignals ist der Verlauf annähernd linear, so dass eine verhältnismäßig unaufwändig berechenbare lineare Regressionsanalyse ausreicht. In anderen Fällen, insbesondere bei schwachen Pegeln und entsprechend dominantem Rauschen oder bei Verwendung einer nicht-flachen Verteilung entsteht ein anderer Funktionsverlauf, häufig einer Gaussverteilung folgend. Dann ist möglich, den Verlauf zunächst zu linearisieren, beispielsweise mit einer Wertetabelle der Ablagen der erwarteten Funktion, und anschließend wiederum eine lineare Regressionsanalyse durchzuführen. Alternativ wird ein anderes Funktionsfit-Verfahren eingesetzt.

Die Auswertungseinheit ist bevorzugt auf einem digitalen Logikbaustein implementiert, wobei ein analoger Vorverarbeiter vorgesehen ist, über welchen das empfangene Signal zu einem bipolaren vorverarbeiteten Signal umwandelbar und über einen A/D-Wandler der Auswertungseinheit zuführbar ist, wobei der Vorverarbeiter insbesondere einen Bandpassfilter oder Differenzierer zur Umwandlung des zunächst unipolaren empfangenen Signals in ein bipolares Signal aufweist. So erzeugt der Vorverarbeiter in verlässlicher, reproduzierbarer Weise Übergange in dem Empfangssignal, an denen sich der Empfangszeitpunkt besonders einfach und genau bestimmen lässt. Die Verteilung der Sendezeitpunkte für die Spreizung und die Filterfrequenz sind aneinander anzupassen. Wird zu weit gespreizt, eliminieren sich Signalanteile unterschiedlichen Vorzeichens des bipolaren Signals in dem Histogramm, während eine zu geringe Spreizung die Interpolation erschwert.

Die Abtastung erfolgt bevorzugt mittels eines Binarisierers als A/D-Wandler, so dass das Empfangssignal als Bitfolge von Nullen und Einsen vorliegt und so binäre Ereignisse für das Histogramm liefert. Dies reduziert den Auswertungsaufwand. Mit derart binären Ereignissen ist die aufgrund der Verteilung entstehende Spreizung besonders nützlich, da ohne Spreizung besonders steile Verläufe im Histogramm entstehen können.

Die Auswertungseinheit ist bevorzugt dafür ausgebildet, den Empfangszeitpunkt anhand eines Nulldurchgangs, eines Extremums oder eines Wendepunktes einer das Histogramm interpolierenden Funktion zu erkennen. Die zeitliche Lage derartiger Charakteristika, besonders von Nulldurchgängen, lässt sich besonders präzise bestimmen. Die Auswertungseinheit ist vorteilhafterweise dafür ausgebildet, mehrere Empfangszeitpunkte von Teilreflexionen und damit die Entfernungen mehrerer in derselben Richtung liegender Objekte zu bestimmen. Bei optoelektronischen Sensoren entstehen auch an teiltransparenten Objekten Reflexionen, beispielsweise an Glasscheiben, Regentropfen oder dergleichen, so dass sowohl diese als auch dahinterliegende opake Objekte in dem Empfangssignal erkennbar sind. Ähnliches gilt für Füllstandsanwendungen mit mehreren Grenzflächen, beispielsweise mehrschichtige Flüssigkeiten wie Öl auf Wasser. Indem die Lage von mehreren dieser Reflexionen bestimmt wird, erkennt der Sensor mehrere oder alle Objekte in Senderichtung.

In bevorzugter Weiterbildung arbeitet ein Analog/Digitalwandler zur Abtastung des empfangenen Signals zur Erhöhung der Abtastrate mit mehreren Taktflanken und/oder Phasen, insbesondere zur Verdopplung mit der steigenden und der fallenden Taktflanke oder je einem um 0° und einem um 180° phasenverschobenen Takt oder zur Vervierfachung mit der steigenden und der fallenden Taktflanke je eines um 0° und um 90° phasenverschobenen Taktes oder mit je einem 0°, 90°, 180° und 270° phasenverschobenen Takt. So wird die begrenzte Auflösung der Abtastung verfeinert.

Die Verteilung ist dabei bevorzugt so gewählt, dass jeder Histogrammwert gleich oft unter jeder Phasenverschiebung ermittelt wird, wobei die Auswertungseinheit dafür ausgebildet ist, die so mehrfach ermittelten Histogrammwerte unter Ausgleich der Phasenverschiebung zeitlich zur Deckung zu bringen. Die Abtastung unter mehreren Phasen führt zeitliche Ungenauigkeiten (Jitter) ein, da die gewünschten Phasen nur mit einem Fehler erreicht werden. Wird jeder Histogrammwert je einmal unter jeder Phase bestimmt, so mitteln sich diese Fehler zumindest teilweise heraus.

Die Auswertungseinheit ist bevorzugt dafür ausgebildet, nur eine Umgebung des Empfangszeitpunkts des Histogramms der Interpolation zugrunde zu legen, insbesondere nur zwei, vier oder acht Werte des Histogramms. Damit wird der Aufwand der Interpolation, insbesondere der Regressionsanalyse, begrenzt. Die Anzahl der Werte ist nochmals bevorzugt an die Anzahl der Phasen angepasst, die bei der Abtastung verwendet wird. Insbesondere werden der Interpolation eine Anzahl von Werten des Histogramms zugrunde gelegt, die dem Einfachen oder einem Vielfachen des Faktors entsprechen, um welche die Abtastrate durch die mehreren Phasen erhöht wird. Wenn beispielsweise vier Phasen verwendet werden und die Regression daran angepasst mit vier Werten gerechnet wird, so trägt ein etwaiger Jitter in jedem Messpunkt in gleicher Weise bei und ist damit herausgemittelt oder zumindest, soweit eine dann aber reproduzierbare Schwerpunktverschiebung verbleibt, durch anfängliches Einlernen eliminierbar.

Die Auswertungseinheit ist bevorzugt dafür ausgebildet, die Umgebung aufzufinden, indem das Histogramm mit einem Korrelations-Filterkern gefaltet wird, wobei der Korrelations-Filterkern den erwarteten Histogrammverlauf um den Empfangszeitpunkt nachbildet. Der ungefilterte Verlauf in dem Histogramm um den Empfangszeitpunkt herum hebt sich gerade bei stark verrauschten Empfangssignalen kaum aus dem Rauschpegel heraus. Der Korrelations-Filterkern erleichtert das Auffinden der für die Interpolation maßgeblichen Messwerte. Korrelations-Filterkern, Frequenz des Bandpassfilters und die Verteilung der Sendezeitpunkte sind aneinander anzupassen. Der Korrelations-Filterkern ist bevorzugt so aufgebaut, dass er links von dem jeweils betrachteten Messpunkt liegende Messwerte positiv und rechts liegende negativ bewertet. Er bildet so den erwarteten Nulldurchgang von positiv nach negativ nach. In der unmittelbaren Umgebung des Empfangszeitpunkts, der ja als Nulldurchgang dem Messwert Null entspricht, entspricht der Informationsgehalt des Histogramms reinem Rauschen. Deshalb werden in dieser unmittelbaren Umgebung in dem Korrelations-Filterkern bevorzugt Gewichte von Null verwendet. Um die Faltung mit dem Filterkern mit geringsten Rechenkosten ohne Multiplikationen ausführen zu können, genügt die Verwendung von +1, 0, -1 als Gewichte des Filters.

Der Sensor ist vorteilhafterweise als optoelektronischer Sensor, insbesondere als Lichttaster oder tastendes Lichtgitter ausgebildet, wobei das elektromagnetische Signal Licht, der Sender ein Lichtsender und der Empfänger ein Lichtempfänger ist. In einem tastenden Lichtgitter werden mehrere entfernungsmessende Lichttaster als parallele Taststrahlen angeordnet. Im Gegensatz zu einem klassischen Lichtgitter ist dabei nur ein einziger Sender/Empfänger-Stick erforderlich, auf das herkömmlich verwendete Gegenstück mit Reflektoren oder Empfängern kann verzichtet werden. Der erfindungsgemäße kostengünstige Aufbau des Messkerns ermöglicht, auch mehrere Strahlen für ein tastendes Lichtgitter kostengünstig zu erzeugen.

Besonders bevorzugt ist der Sensor als entfernungsmessender Laserscanner ausgebildet, der eine drehbare Ablenkeinheit aufweist, um das ausgesandte Signal periodisch über einen Abtastbereich abzulenken. Herkömmliche Entfernungsmessungen mit einem statistischen Ansatz sind zu langsam für die Scanbewegungen. Die erfindungsgemäße Lösung mit ihrer genauen Direktmessung aus nur einem Histogramm erfüllt auch die Geschwindigkeitsansprüche eines Laserscanners.

Als eine Anwendung außerhalb der Optoelektronik ist der Sensor vorteilhafterweise als Füllstandssensor nach dem Radar- oder dem TDR-Prinzip ausgebildet, wobei das elektromagnetische Signal ein Mikrowellensignal, der Sender ein Mikrowellensender und der Empfänger ein Mikrowellenempfänger ist. Derartige Sensoren lassen sich erfindungsgemäß mit Auflösungen im Millimeterbereich herstellen.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: ein Blockschaltbild des Messkerns für die Signalverarbeitung eines erfindungsgemäßen Sensors;
- Fig. 2: eine schematische Darstellung der Signale in unterschiedlichen Verarbeitungsstadien zur Erläuterung des Auswertungsverfahrens;
- Fig. 3a-c: schematische Signalverläufe zur Erläuterung der Signalaufspreizung zur Interpolation des Empfangszeitpunkts mit höherer zeitlicher Auflösung;
- Fig. 4: ein schematisches Histogramm sowie dessen Verlauf nach Bearbeitung mit einem Korrelations-Filterkern;
- Fig. 5: schematische Signalverläufe zur Erläuterung der Erhöhung der Abtastrate durch mehrere Phasenlagen sowie deren Verschränkung zur Beseitigung von Jitter;
- Fig. 6: ein Blockschaltbild zur Erzeugung einer hochauflösenden Zeitbasis;
- Fig. 7: schematische Signalverläufe zur Erläuterung der Erzeugung der Zeitbasis;
- Fig.8: eine schematische Blockdarstellung eines entfernungsmessenden Lichttasters mit einem erfindungsgemäßen Messkern;
- Fig. 9: eine schematische Blockdarstellung eines entfernungsmessenden Laserscanners mit einem erfindungsgemäßen Messkern; und
- Fig. 10: eine schematische Blockdarstellung eines Füllstandssensors mit einem erfindungsgemäßen Messkern.

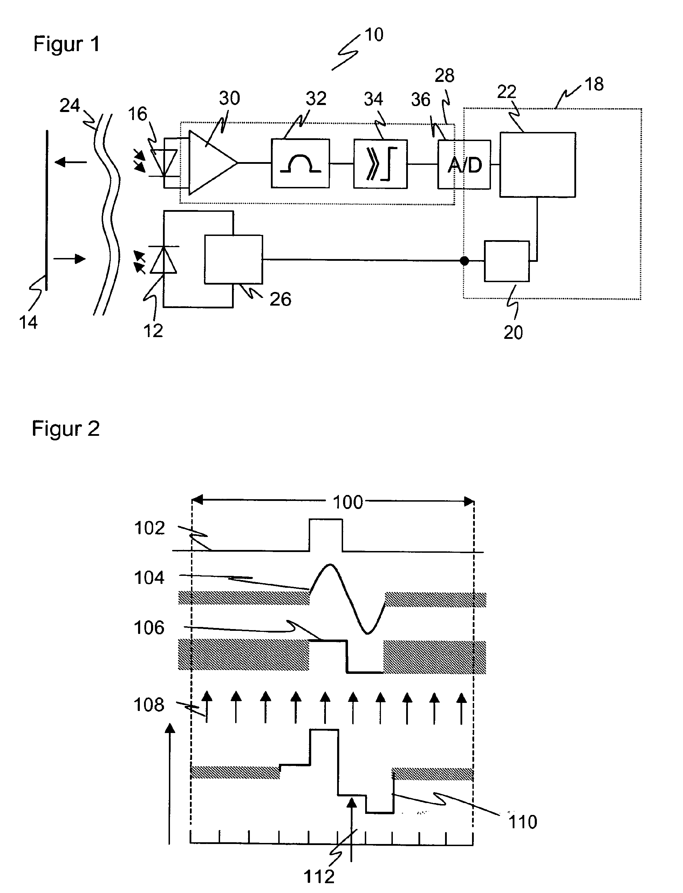

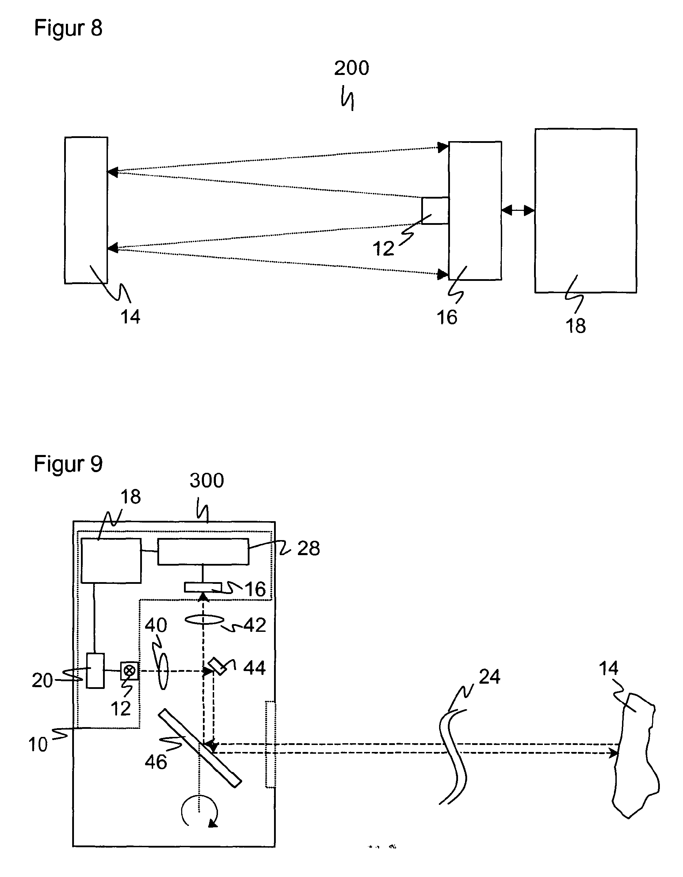

Figur 1 zeigt ein Blockschaltbild eines erfindungsgemäßen Messkerns 10 zur Bestimmung einer Entfernung nach einem Signallaufzeitprinzip. Beispiele für Sensoren, in denen der Messkern 10 eingesetzt wird, sind abschließend im Zusammenhang mit den Figuren 8-10 aufgeführt. Über einen Sender 12 wird ein elektromagnetisches Signal, etwa ein Lichtpuls oder ein Mikrowellenpuls, ausgesandt und von einem Objekt 14 zurückgeworfen, welches auch ein Reflektor oder eine Grenzfläche zweier Medien sein kann. Das reflektierte Signal wird in einem Empfänger 16 registriert und in ein elektrisches Empfangssignal umgewandelt.

Sender 12 und Empfänger 16 werden von einer Steuerung 18 angesteuert und ausgewertet. Die Steuerung 18 veranlasst den Sender 12, einzelne Pulse zu einer bekannten Zeit auszusenden, und bestimmt den Empfangszeitpunkt des reflektierten Pulses in dem Empfänger 16. Aus dem Empfangszeitpunkt errechnet sich mit dem bekannten Aussendezeitpunkt die Signallaufzeit, die wiederum über die Signalgeschwindigkeit, in den meisten Anwendungen die Vakuumlichtgeschwindigkeit, der Entfernung des Zielobjekts 14 entspricht.

Die Steuerung ist in der beschriebenen erfindungsgemäßen Ausführungsform auf einem FPGA (Field Programmable Gate Array) 18 implementiert. Alternative digitale Bausteine sind Mikroprozessoren, PLD (Programmable Logic Device), ASIC (Application-Specific Integrated Circuit) oder DSP (Digital Signal Processor) Die Steuerung 18 weist eine Sendezeitpunkts-Einstellungseinrichtung 20 und eine eigentliche Auswertungseinheit 22 auf. Das Zielobjekt 14 ist für gewöhnlich im Maßstab der Figur 2 weiter entfernt, wie durch gebrochene Linien 24 angedeutet ist.

Der Messkern 10 hat einen Sendepfad, zu dem neben dem eigentlichen Sender 12 noch eine Treiberschaltung 26 und die Verzögerungseinrichtung 20 gehört, sowie einen Empfangspfad, zu dem der Empfänger 16 gehört, der über einen analogen Vorverarbeiter 28 das digitalisierte Empfangssignal der Auswertungseinheit 22 zuführt.

Der analoge Vorverarbeiter 28 bildet einen mehrstufigen Verarbeitungspfad. Dieser beginnt mit einem Verstärker 30, etwa einem Transimpedanzverstärker, der das Signal des Empfängers 16 annimmt und verstärkt. Ein nachgeschalteter Filter 32, der beispielsweise-ein. Bandpassfilter oder ein Differenzierer sein kann, wandelt das unipolare Signal des Pulses in ein bipolares Signal um. Verstärker 30 und Filter 32 können auch in umgekehrte Reihenfolge geschaltet sein. Als nächste Vorverarbeitungsstufe ist ein Begrenzungsverstärker 34 vorgesehen, der die Amplitude so weit verstärkt und anschließend abschneidet, dass das Pulssignal zu einem in die Sättigung getriebenen Rechteckpuls wird. Dieses Signal wird als letzte Vorverarbeitungsstufe einem A/D-Wandler 36 zugeführt, insbesondere einem Binarisierer, der die Amplitude nicht in einen digitalen Zahlenwert, sondern lediglich in einen Binärwert umwandelt. Der A/D-Wandler 36 ist bevorzugt kein eigener Baustein, sondern über die Eingänge des FPGA 18 mit einfachen vorgeschalteten analogen R- oder RC-Netzwerken realisiert.

Der Signal- und Auswertungspfad in dem Messkern 10 durch die soeben beschriebenen Komponenten wird nunmehr mit Hilfe von Figur 2 beschrieben. Dabei ist eine statistische Auswertung einer Vielzahl von Einzelmessungen vorgesehen, weil die Signale der Einzelmessung viel zu stark verrauscht sind, um zuverlässige Empfangszeitpunkte bestimmen zu können.

Der Sender 12 erzeugt in jeder Messperiode 100 jeweils einen Puls, der die Bestimmung eines präzisen Zeitpunkts ermöglicht. Als Signalform eignet sich ein Rechteckpuls, es sind aber auch andere Pulse, wie beispielsweise Gausspulse, multimodale Signale beispielsweise zur codierten Zuordnung jedes Signals und auch Stufen denkbar. All diese Signalformen werden im Weiteren nur noch als Puls bezeichnet.

Der Puls wird an dem Zielobjekt 14 reflektiert und nach Umwandlung in dem Empfänger 16 in ein elektrisches Signal in dem Verstärker 30 verstärkt. Das entstehende verstärkte elektrische Signal 102 ist idealisiert dargestellt, unter realistischen Bedingungen wäre der empfangene Puls 102 kein sauberes Rechteck, sondern würde an den Flanken Transienten und insgesamt ein Rauschen zeigen.

In dem Filter 32 wird der unipolare Empfangspuls 102 zu einem bipolaren Signal 104 umgewandelt. Dies kann mit einem Bandpassfilter geeigneter Filterfrequenz realisiert werden. Neben dem bipolaren Signal 104 sind graue Rechtecke dargestellt, die den Rauschpegel symbolisieren sollen. Der Rauschpegel kann in der Praxis die Amplitude des verstärkten Signals 102 übertreffen. Es ist weiterhin nur eine Sinusschwingung des bipolaren Signals 104 dargestellt. Nachschwingungen, also weitere Sinusperioden mit zunehmend gedämpfter Amplitude, sind der vereinfachten Darstellung halber weggelassen. Selbstverständlich ist auch nicht immer ein reiner Sinus, jedoch eine Kurve mit Maximum und Minimum zu erwarten.

In dem Begrenzungsverstärker 34 wird das bipolare Signal 104 so weit verstärkt und abgeschnitten, dass das eigentliche Signal zu einer Rechteckflanke 106 wird und der durch graue Rechtecke dargestellte Rauschpegel in seiner Amplitude über den gesamten Dynamikbereich gedehnt wird.

Die Rechteckflanke 106 wird in dem Binarisierer 36 mit einer Abtastrate von beispielsweise 2,5 ns abgetastet. Diese Abtastrate ist in der Figur 2 durch Pfeile 108 symbolisiert. Die entstehende Bitfolge, bei den angegebenen Zahlenwerten je 1 Bit pro 2,5 ns, wird in der Auswertungseinheit 22 verwendet, um ein Histogramm 110 zu bilden. Dafür ist für jedes entsprechend der Abtastrate 2,5 ns breite Bin ein Akkumulator vorgesehen, der nur bei einem zugehörigen Bitwert "1" heraufgezählt wird.

Bei idealen, unverrauschten Signalen würde in diesem Histogramm 110 nur dasjenige Bin gefüllt, über dem die Rechtflanke 106 liegt. Der von dem Begrenzungsverstärker 34 angehobene Rauschpegel füllt aber auch die übrigen Bins, und zwar wegen der Zufälligkeit des Rauschens im Erwartungswert etwa in jeder zweiten Messperiode 100.

Wird das soeben beschriebene Verfahren iteriert und das Histogramm 108 über k Messperioden 100 gebildet, so sind die Bins durch das Rauschen ungefähr mit dem Wert k/2 gefüllt, wobei statistische Schwankungen hinzukommen. Dieser Wert k/2 entspricht aufgrund der Binarisierung dem Signalwert Null. Daraus erhebt sich nach oben das durch den positiven Teil des bipolaren Signals 104 gebildete Maximum und nach unten das entsprechende Minimum heraus. Zusammen mit den nicht dargestellten Nachschwingungen zeigt das Histogramm in dem Zeitintervall des Empfangssignals einen charakteristischen Verlauf, dessen Signatur die Auswertungseinheit 22 verwendet, um den Empfangszeitpunkt zu bestimmen. Die statistische Auswertung einer Vielzahl von Einzelmessungen ermöglicht dies auch dann, wenn die Einzelmessung in einer Messperiode 100 wegen zu hoher Rauschanteile keine zuverlässige Entfernungsbestimmung zulässt.

Der Empfangszeitpunkt lässt sich am besten anhand des ersten Nulldurchgangs von Maximum auf Minimum bestimmen. In der Figur liegt dieser Nulldurchgang in dem mit einem Pfeil 12 bezeichneten Bin. Die zeitliche Genauigkeit dieser Information ist auf die Auflösung des Histogramms 110, also auf beispielsweise 2,5 ns begrenzt und damit direkt an die Abtastrate des A/D-Wandlers 36 gekoppelt.

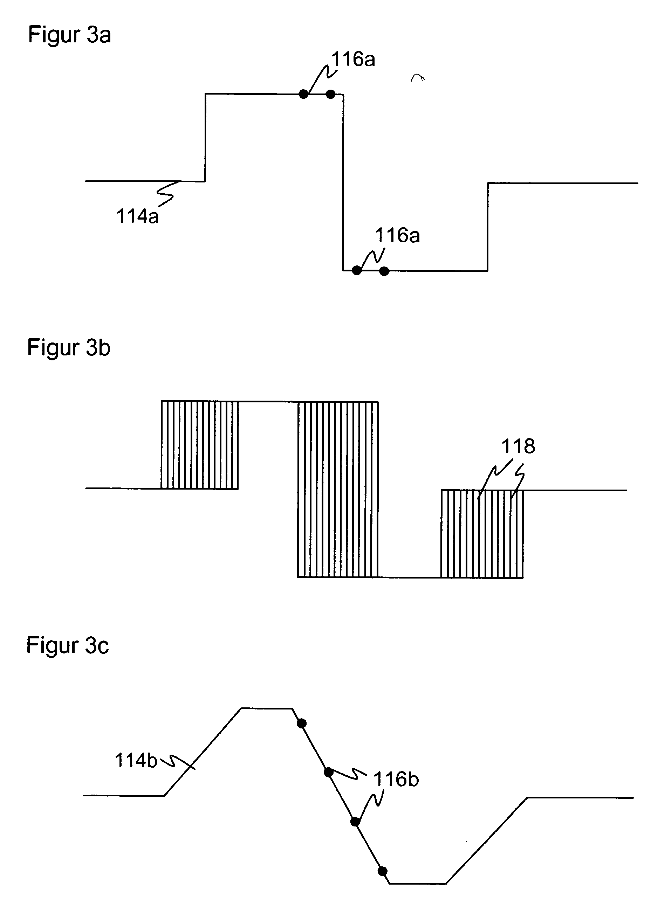

Erfindungsgemäß ist vorgesehen, die zeitliche Genauigkeit durch Interpolation zu verbessern. Figur 3a zeigt beispielhaft ein Histogramm 114a mit den vier dem Nulldurchgang benachbarten Abtastpunkten 116. DieseAbtastpunkte 116 entsprechen den Histogrammbalken des Histogramms 110 der Figur 2. Das Histogramm 114a ist vereinfacht mit geraden Linien ohne Rauscheinfluss dargestellt. Diese Situation entspricht hohen Pegeln mit Sättigungseffekten, also stark reflexiven Objekten 14 und/oder kurzen Entfernungen. Bei schwachen Pegeln ist stattdessen wegen des Rauscheinflusses ein gaussischer Verlauf der Flanken zu erwarten.

Die Flanke im Histogramm 114a fällt wegen der Diskretisierung praktisch instantan ab. Eine Interpolation auf Basis der Abtastpunkte 116 führt daher gegenüber der Auflösung des Histogramms 114a zu keiner Verbesserung.

Erfindungsgemäß ist deshalb vorgesehen, diese Flanke zeitlich zu spreizen, um sie einer Interpolation zugänglich zu machen. Dazu wird das Sendeverhalten modifiziert. Statt bei der Aufnahme des Histogramms mit jeder Wiederholung den Sendepuls zum gegenüber dem Beginn der Messperiode gleichen Zeitpunkt auszusenden, wird dieser Zeitpunkt in den Wiederholungen variiert.

Figur 3b zeigt schematisch die Überlagerung der derart verteilten Sendepulse 118. Dabei werden beispielhaft in vierzehn Widerholungen ebenso viele Sendepulse 118 in einem äquidistanten Abstand erzeugt. Dies wird im Rahmen dieser Beschreibung als eine flache Verteilung bezeichnet, weil die Häufigkeit der Verwendung der jeweiligen Sendeverzögerungen konstant ist.

Wie in Figur 3c zu erkennen, sorgt die Verteilung der Sendeverzögerungen dafür, dass die vormals senkrechte Flanke in dem Histogramm 114b schräg gestellt wird. Die Abtastzeitpunkte 116b liegen auf einer fallenden Geraden und sind so einer linearen Regressionsanalyse zugänglich. Die Auflösung der Messung wird damit unabhängig von der Auflösung des Histogramms 114 und so um Größenordnungen verbessert.

Die Verteilung der Sendezeitverzögerungen wird vorteilhaft so gewählt, dass gerade die Anzahl für die Regression benötigter Abtastpunkte 116 nicht mehr in dem Sättigungsbereich liegt, also die gespreizte Flanke bildet. In dem dargestellten Beispiel sind es vier Abtastpunkte 116b. Eine Regression kann alternativ mit mehr und mit weniger Abtastpunkten 116 gerechnet werden. Beträgt beispielsweise die Abtastrate 400MHz, so soll die Flanke insgesamt 4*2,5 ns = 10 ns umfassen. Dies lässt sich durch die dargestellten vierzehn Sendeverzögerungen erreichen, wenn diese um 10/14 ns gegeneinander verschoben sind.

Die Anzahl von vierzehn Sendeverzögerungen ist ein reines Zahlenbeispiel, in der Praxis werden meist mehr undfeinere.rSendeverzögerungen erforderlich sein. Für die Interpolation soll nämlich nicht nur diskret an den durch die Sendeverzögerungen gegebenen Zeitpunkten Messinformation gewonnen werden, sondern auch in den Zwischenintervallen. Dies lässt sich erreichen, wenn Rauschterme die anhand der diskret angesteuerten Sendezeitpunkte gewonnene Information im Zeitbereich nach Möglichkeit bis hin zu einem Kontinuum verschmieren. Bei schwachen Pegeln liegen solche Rauschterme meist ohnehin vor. Bei gesättigten Pegeln kann beispielsweise die Genauigkeit der zeitlichen Auflösung, mit denen die Sendeverzögerungen vorgebbar sind, die erforderlichen Rauschterme einführen. Die Abstände zwischen den einzelnen Sendepulsen 118 sollten, um das angestrebte Kontinuum zu erreichen, jeweils in der Größenordnung der beispielsweise über die Standardabweichung gegebenen zeitlichen Breite der Rauschterme liegen.

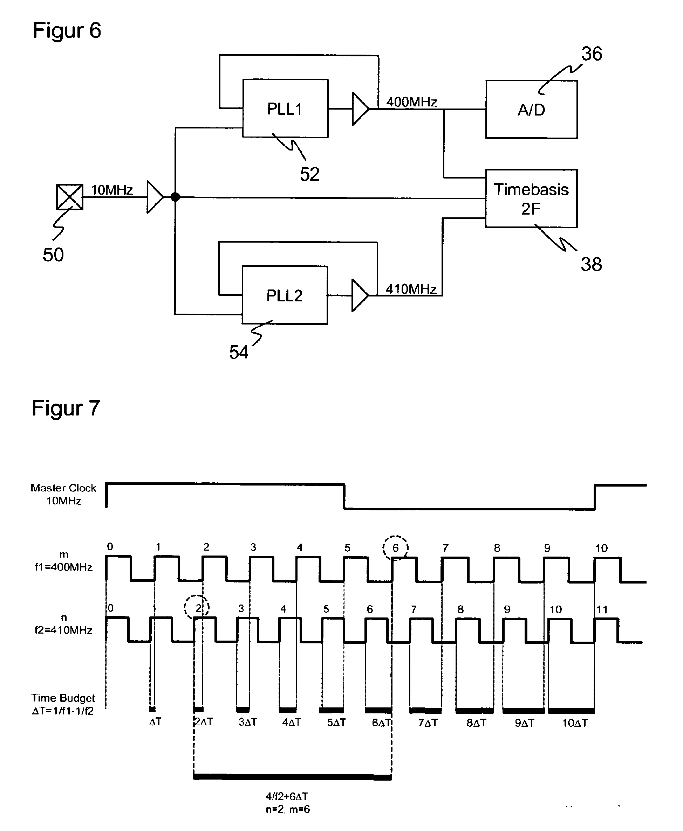

Mit anderen Abtastraten und zusätzlichen Sendezeitverzögerungen werden noch feinere Auflösungen möglich. Dabei ist zu beachten, dass die Sendezeitverzögerungen nicht an das Abtastraster gebunden sind. Sie können im Gegenteil feiner gewählt werden, beispielsweise durch DDS (Direct Digital Synthesis) oder durch Auskopplung aus zwei gegeneinander verstimmten Frequenzen, wie im Zusammenhang mit den Figuren 6 und 7 unten noch näher erläutert.

Anstelle einer flachen Verteilung, wie in Figur 3b gezeigt, sind auch andere Verteilungen denkbar. Dazu eignet sich besonders eine gaussförmige Verteilung. Einen ähnlichen Effekt wie eine gaussförmige Verteilung bewirken auch schwächere Pegel, da dann die Flanke nicht mehr so steil abfällt wie in Figur 3a, sondern durch das Rauschen gaussförmig verzerrt wird. Vor einer linearen Regression muss dann die Flanke linearisiert werden, indem die Ablagen, die durch den gaussförmigen Verlauf entstehen, vorab korrigiert werden. Dazu sind zur Vereinfachung der Berechnung diese Ablagen in einer Tabelle hinterlegt. In der Praxis ist der Aufwand einer Linearisierung mit inverser Gaussfunktion in manchen Anwendungen gegenüber der erzielten Verbesserung zu hoch, so dass die flache Verteilung bevorzugt wird.

Voraussetzung für die anhand Figur 3 beschriebene Interpolation ist, die für die Interpolation heranzuziehenden Abtastpunkte 116 zu identifizieren. Dazu muss der als Charakteristikum verwendete Nulldurchgang von erstem Maximum auf erstes Minimum in dem Histogramm 114 gefunden werden. Der Messkern 10 verwendet dabei keine Informationen über die Historie erkannter Objekte 14, um schnell und dynamisch messen zu können, sondern entnimmt alle messwertrelevanten Informationen einem einzelnen Histogramm 114.

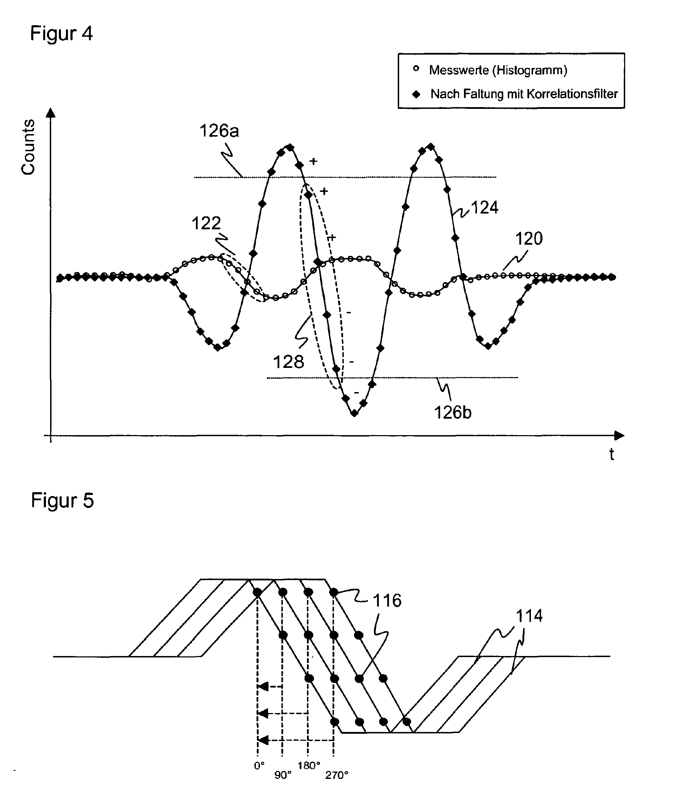

Figur 4 zeigt mit kreisförmigen Messpunkten den beispielhaften Verlauf eines gemessenen Histogramms 120 mit allen Nachschwingungen. Zu identifizieren sind die Abtastpunkte um den ersten Nulldurchgang, die mit einem gestrichelten Oval 122 bezeichnet sind. Bei gesättigtem Pegel würde in dem Bereich 122 ein senkrechter Abfall des Histogramms 120 entstehen. Das Histogramm ist demnach bei schwachem Pegel aufgezeichnet, oder es wurde vorab wie zu Figur 3 beschrieben durch die Verteilung der Sendezeitpunkte gespreizt.

Eine direkte Suche nach der Signatur des ersten Nulldurchgangs in dem Histogramm 120 wäre gegenüber Rauschtermen und anderen Störeffekten nicht hinreichend stabil. Deshalb wird das Histogramm 120 mit einem Korrelations-Filterkern gefaltet. Dabei entsteht der Kurvenzug 124 mit rautenförmigen Messpunkten.

Eine echte Korrelation wäre sehr rechenintensiv und auf einem FPGA zumindest nicht in Quasi-Echtzeit realisierbar. Deshalb wird ein einfacher Filterkern verwendet, dessen Korrelationskoeffizienten an die Filterfrequenz des Filters 32 und die Spreizung durch die im Zusammenhang mit Figur 3 beschriebene Verteilung angepasst sind. Bewertet wird die Umgebung des Übergangs, wobei die Punkte in der unmittelbaren Nachbarschaft des Übergangs ausgenommen sind, weil dort nur Rauschinformationen zu erwarten sind. Ein konkretes Beispiel für die Filterkoeffizienten ist +1, +1, +1, +1, 0, 0, 0, -1, -1, -1, -1. Ein solcher Filterkern kann allein mit Addieren ohne rechenintensive Multiplikationen bearbeitet werden. Die Anzahl der Wiederholungen ist eine Konkretisierung der Anpassung an die Verteilung und die Anzahl verwendeter Stützpunkte der Interpolation.

In dem Kurvenzug 124 sind aufgrund des Korrelationsfilters die Übergänge wesentlich robuster zu identifizieren. Gesucht wird nach der typischen Signatur des Vorzeichenwechsels von Positiv zu Negativ zwischen dem ersten Maximum und dem ersten Minimum, die durch Anlegen einer oberen Schwelle 126a und einer unteren Schwelle 126b erkannt werden. Nach diesem Kriterium werden die Punkte in dem Oval 128 des Kurvenzugs 124 erkannt. Dabei ist nicht zwingend notwendig, dieselbe Anzahl von Punkten zu identifizieren, die später für die Interpolation verwendet werden. Es geht darum, einen Zeitpunkt festzulegen, um den herum die relevanten Abtastpunkte in dem Oval 122 liegen. Der durch das Oval 128 bestimmte Zeitpunkt passt deshalb noch nicht unmittelbar zu den gesuchten Abtastpunkten in dem Oval 122, weil der Kurvenzug 124 einen zeitlichen Versatz gegenüber dem Histogramm 120 hat, der systembedingt durch die Rechenzeit für die Faltung entseht. Dieser Versatz ist aber konstant, bekannt und damit kompensierbar. Somit sind auch die relevanten Abtastpunkte in dem Oval 122 identifiziert.

Mit diesem Verfahren sind auch zusätzliche Reflexionen auswertbar, die beispielsweise von Glasscheiben oder anderen, für das verwendete Signal teiltransparenten Objekten 14 erzeugt werden.

Figur 5 zeigt ein Verfahren, mit dem die Abtastrate des A/D-Wandlers 36 um einen Faktor erhöht werden kann. Entsprechend verbessert sich auch die Genauigkeit der Interpolation und damit die Auflösung des Messkerns 10. Für die erhöhte Abtastrate wird nicht nur ein Takt verwendet, sondern mehrere gegeneinander phasenverschobene Taktnetze. Beispielsweise stellt das FPGA 18 der Steuerung derartige phasenverschobene Takte bereits zur Verfügung. Bei Verwendung von 0°, 90°, 180° und 270° gegeneinander verschobener Takte erhöht sich so die Abtastrate um einen Faktor vier. Mehr oder weniger Phasen sind denkbar, wobei nach oben ein Limit durch die Fehler in der Phasenlage gegeben ist, die ±5° und mehr betragen können.

Die genannten Fehler in der Phasenlage führen zu einer Ungenauigkeit oder einem Jitter der Abtastung. Durch den Jitter wird die Erhöhung der Messgenauigkeit beeinträchtigt, die durch eine erhöhte Abtastung und damit verbesserte Interpolation erreicht werden könnte. Deshalb ist erfindungsgemäß wie in Figur 5 gezeigt eine Verschränkung zur Korrektur des Jitters vorgesehen. Dabei wird dafür gesorgt, dass jeder Abtastpunkt mehrfach jeweils gleich oft unter Verwendung jedes Taktnetzes, also jeder Phasenlage, erzeugt wird. So entsteht im Beispiel der verwendeten vier Phasenlagen die per Interpolation auszuwertende Flanke vierfach, und die Flanken werden anschließend durch Kompensation der bekannten Phasenlagen übereinander geschoben. Jeder etwaige Fehlerterm in einer Phasenlage trägt damit zu jedem Abtastpunkt in gleicher Weise bei. Die Fehlerterme mitteln sich so zum Großteil heraus. Eine dennoch verbleibende Schwerpunktsverschiebung ist konstant und betrifft alle Abtastpunkte gleichermaßen, so dass auch sie einfach kompensiert werden kann, etwa durch einen Einlernvorgang.

Anstelle der verschobenen Phasenlagen, oder auch zusätzlich dazu, können sowohl die fallende als auch die steigende Flanke des Taktes für die Abtastung genutzt werden, um einen weiteren Faktor zwei bei der Auflösung zu gewinnen. Verwendet man beispielsweise zwei Takte, die um 0° und um 90° phasenverschoben sind, und dann jeweils die fallende und die steigende Flanke, so entspricht das effektiv einer Abtastung bei 0°, 90°, 180° und 270° und damit einer Auflösungsverbesserung mit dem Faktor vier.

Anhand der Figuren 6 und 7 wird nun ein Verfahren näher ehäutert, mit dem die Sendezeitpunkts-Einstellungseinrichtung 20 die Verteilung der Sendezeitpunkte für die Spreizung mit einer hohen Auflösung erzeugt, wobei diese Auflösung auch deutlich höher sein kann als die Abtastrate des A/D-Wandlers 36. Alternativ zu dem beschriebenen Verfahren kann eine DDS eingesetzt werden, wobei aber ein solcher Baustein mit der geforderten Auflösung wesentlich kostenintensiver ist.

Aus einem Mastertakt 50 von 10 MHz wird in einer ersten PLL 52 (Phase-locked Loop) und einer zweiten PLL 54 ein geteilter Takt als Vielfaches des Mastertakts 50 von f1=400 MHz bzw. f2=410 MHz erzeugt. Eine Zeitbasiseinheit 38 erhält die beiden Frequenzen der PLLs 52, 54 sowie zur Synchronisation den Mastertakt 50 selbst. Die Frequenzen werden in der Zeitbasiseinheit 38 so verschaltet, dass ihre Phasenablage zur reproduzierbaren Erzeugung von Zeitinkrementen der gewünschten Auflösung genutzt werden kann, mit denen die Sendezeitpunkts-Einstelleinrichtung 20 versorgt wird. Die Frequenz von 400 MHz der ersten PLL 52 kann zugleich als Abtastrate für den A/D-Wandler 36 dienen.

Wie in Figur 6 zu sehen ist, laufen die Perioden der beiden unterschiedlichen Frequenzen 400 MHz und 410 MHz zunehmend auseinander und treffen sich nach einer Periode des Mastertakts 50 von 100ns wieder. Zu diesem Zeitpunkt erfolgt jeweils eine Synchronisation auf die theoretisch zeitgleiche steigende oder fallende Flanke, damit ein etwaiges Auseinanderlaufen der PLLs 52, 54 und des Mastertakts 50 ausgeglichen wird. Figur 6 ist vereinfacht und zeigt nur 10 bzw. 11 Perioden. Mit höheren Periodenanzahlen, die zur optimalen Auflösungserhöhung um Eins voneinander abweichen oder zumindest zueinander teilerfremd sind, werden noch kleinere Zeitinkremente erreicht.

Die PLLs 52, 54 werden bevorzugt von dem FPGA 18 zur Verfügung gestellt. Die beiden Frequenzen können aber auch anders als mittels PLLs erzeugt werden. Selbstverständlich sind eine von 10 MHz abweichende Masterfrequenz und andere als die beispielhaften Frequenzen f1=400 MHz und f2=410 MHz von der Erfindung umfasst, wobei die Wahl einen Ausgleich zwischen Stabilität der erzeugten abgeleiteten Frequenz und einer möglichst kurzen Differenzperiode finden muss. Zeitraster im Bereich von Pikosekunden und darunter sind durch diese Wahl zumindest prinzipiell erreichbar.

Die Perioden der abgeleiteten Frequenzen f1 und f2 werden in durch diese Frequenzen getriggerten Schieberegistern durchgezählt, so dass der Zeitbasiseinheit 38 wie in Figur 6 dargestellt bekannt ist, zu welcher Periode eine Flanke gehört. Zwischen der jeweils i-ten Periode von f1 und f2 bildet sich ein zunehmender Phasenunterschied aus, der nach einer vollen Periode des Mastertakts 50 gerade so groß wird, dass die 11te Periode von f2 zeitgleich mit der 10ten Periode von f1 zu liegen kommt. Diese Unterschiede stehen in Form von Zeitinkrements oder Zeitbudgets als Vielfache der Differenzperiode ΔT = 1/f1-1/f2 zur Verfügung.

Die Zeitbasiseinheit 38 wählt nun jeweils ein Pärchen aus n-ter Periode der Frequenz f2 und m-ter Periode der Frequenz f1 aus, um beliebige Vielfache der Differenzperiode zu erzeugen. Jedes Pärchen hat relativ zum Mastertakt 50 eine feste Position. Beispielsweise entspricht n=2 und m=6 einem Zeitintervall von 4/f2+6ΔT, wobei 1/f2=41ΔT gilt. Volle Perioden der Mastertakts werden dabei hinzugezählt, um die Messperiode 100 zu füllen, beispielsweise durch eine übergeordnete, das Timing maskierende Steuereinheit, welche am Mastertakt festgemacht ist. Dabei werden mit jeder Synchronisation die Zähler zurückgesetzt, so dass die Nummerierung der Pärchen neu beginnt. Sofern die Perioden von f1 und f2 über den Synchronisationszeitpunkt weitergezählt werden, können alternativ auch die Pärchen unmittelbar längere Zeitintervalle festlegen. Um die Pärchen definiert auskoppeln zu können, sollten die beiden abgeleiteten Frequenzen f1 und f2 eine starre Kopplung zum Mastertakt haben, wie dies durch PLLs gegeben ist.

Aufgrund der beiden abgeleiteten Frequenzen f1 und f2 steht somit eine Zeitbasis zur Verfügung, welche wesentlich feiner ist als das Abtastraster. Damit kann entweder der tatsächliche Sendezeitpunkt gegenüber einer Referenzzeit um Vielfache der Differenzperiode verzögert werden, oder das eine Element des Pärchens definiert den Sendezeitpunkt, das andere den Zeitpunkt zum Start der statistischen Aufzeichnung des Empfangsmusters in der Histogrammeinheit 42. Damit besteht ein zeitlicher Versatz zwischen Sendezeitpunkt und Empfangszeitpunkt, der von dem Abtastraster mit den langsamen 2,5ns unabhängig ist. Die Zeitbasiseinheit 38 kann vollständig innerhalb des FPGA 18 arbeiten und ist deshalb einfach implementierbar und wenig störanfällig.

Die Figuren 8 bis 10 zeigen nicht abschließend einige Sensoren, in denen der Messkern 10 einsetzbar ist. Dabei bezeichnen die gleichen Bezugszeichen wie in allen Figuren die gleichen oder analoge Merkmale. In Figur 8 ist ein eindimensionaler optoelektronischer Sensor 200 sehr vereinfacht dargestellt, wobei der Sender 12 als Lichtsender und der Empfänger 16 als Lichtempfänger ausgebildet ist. Es kommen unter anderem beliebige Laserlichtquellen als Lichtsender 12 in Frage, beispielsweise Kantenemitter oder VCSELs (Vertical-Cavity Surface-Emitting Laser), und prinzipiell sind auch andere Lichtquellen wie LEDs geeignet, sofern sie zeitlich hinreichend scharfe Signale erzeugen können. Entsprechend ist der Empfänger als Photodiode 16 gezeigt, wobei auch der Einsatz einer PSD (positionsempfindliche Diode) oder einer Zeile beziehungsweise Matrix von Lichtempfangselementen denkbar ist, wie etwa einem CMOS-Chip, also allgemein jeder Empfänger, der ein Lichtsignal in ein elektrisches Signal umwandeln kann. Die Erfindung kommt wegen der verbesserten Auswertung mit einfachen Lichtquellen 12 und einfachen Lichtempfängern 16 aus.

Der Lichtsender 12 verdeckt nur einen kleinen und unerheblichen Anteil des an einem Reflektor oder dem Zielobjekt 14 reflektierten Lichtstrahls, der sich auf seinem Weg aufweitet. Alternativ sind auch andere bekannte optische Lösungen einsetzbar, wie Autokollimation etwa mit einem Strahlteiler und einer gemeinsamen Optik, oder Pupillenteilung, wo zwei getrennte Optiken vorgesehen sind und Lichtsender und Lichtempfänger nebeneinander angeordnet werden.

Der Sensor 200 kann ein optoelektronischer Taster oder Entfernungsmesser sein. Neben einer eigentlichen Entfernungsmessung, bei der ein Absolutwert für eine Entfernung zu einem Objekt 14 ermittelt wird, ist auch die Überwachung eines eingelernten Abstands, beispielsweise zu einem festen kooperativen Ziel 14, auf Änderungen des eingelernten Abstands denkbar. Eine weitere Ausführungsform ist eine Reflexionslichtschranke, also eine Lichtschranke mit einem Lichtsender und einem gegenüber angeordneten Reflektor, wobei eine Unterbrechung des dort reflektierten Strahls detektiert wird. Durch die Messung der Entfernung oder der Änderung der Entfernung dieses Reflektors kann überwacht werden, ob der Reflektor noch am erwarteten Ort steht. Alle genannten Sensoren können einen Entfernungswert ausgeben oder anzeigen oder auch als Schalter arbeiten, indem ein Schaltereignis bei Detektion eines Objekts in einer bestimmten Entfernung oder bei Abweichung von einer erwarteten Entfernung ausgelöst wird.

Mehrere Sensoren 200 können kombiniert werden, um ein tastendes Lichtgitter mit mehreren, meist parallelen Strahlen zu bilden, welches in jedem Strahl Entfernungen misst oder überwacht. Auch mobile Systeme sind denkbar, bei denen der Sensor 10 beweglich montiert ist.

In Figur 9 ist ein Laserscanner 300 mit dem Messkern 10 dargestellt. Lichtsender 12 und Lichtempfänger 16 ist jeweils eine Optik 40, 42 zugeordnet, wobei derartige Optiken üblicherweise auch bei einem eindimensionalen Sensor 300 gemäß Figur 8 vorgesehen sind. Der Scanstrahl des Lichtsenders 12 wird über eine erste Ablenkeinheit 44 und eine zweite Ablenkeinheit 46 in den Überwachungsbereich gelenkt. Die beispielsweise als Spiegel ausgebildeten Ablenkeinheiten 44, 46 sind drehbar gelagert, so dass der Scanstrahl periodisch über eine Scanebene geführt wird. Dabei ist die drehbare Einheit mit den Ablenkeinheiten 44, 46 mit einem Encoder versehen, so dass die Winkellage stets bekannt ist. Die erste Ablenkeinheit 44 verdeckt nur einen vernachlässigbar kleinen Anteil des reflektierten Scanstrahls, der somit nahezu vollständig nach erneuter Ablenkung an der zweiten Ablenkeinheit 46 auf den Lichtempfänger 16 trifft und in dem Messkern 10 ausgewertet wird, um die Entfernung des Objekts 14 zu bestimmen. Auf diese Weise gewinnt der Laserscanner 300 anhand der Winkellage und der Abstände Entfernungsprofile in seiner Scanebene. Es sind abweichende Aufbauten von Laserscannern bekannt, beispielsweise mit einem drehbaren Spiegelpolygonrad, die von der Erfindung ebenfalls umfasst sind. Die erfindungsgemäße Direktauswertung der Histogramme mittels Interpolation ist schnell genug, um während der raschen Scanbewegung ausreichend schnell Messwerte zu liefern.

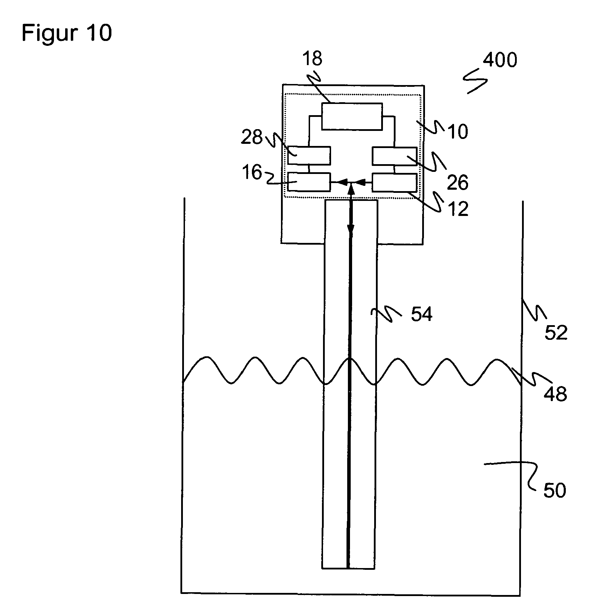

Figur 10 zeigt einen Füllstandssensor 400 nach dem TDR-Prinzip mit dem Messkern 10, der die Entfernung zu einer Grenzfläche 48 eines Mediums 50 und damit den Füllstand des Mediums 50 in einem Behälter 52 misst. Der Sender 12 ist hier als Mikrowellensender ausgeführt, dessen Mikrowellenpuls auf einer Sonde 54 zu der Grenzfläche 48 geführt und dort aufgrund der unterschiedlichen Dielektrizitätskonstante des umgebenden Mediums 50 zumindest teilweise reflektiert wird. Entsprechend ist der Empfänger 16 ein Mikrowellenempfänger, und der Empfangszeitpunkt wird in dem Messkern 10 bestimmt. Die Sonde 54 ist in Figur 10 eine Koaxialsonde. Andere Sondenformen, beispielsweise eine Monosonde mit nur einem Leiter sind bekannt. Füllstandsmessungen werden auch nach dem Radarprinzip ohne Führung auf einer Sonde 54 durchgeführt. Alle derartigen Messungen sind von der Erfindung umfasst.

## Patentansprüche

1. Sensor (200, 300, 400) zur Messung von Entfernungen oder Entfernungsänderungen nach dem Signallaufzeitprinzip mit einem Sender (12) zum Aussenden eines elektromagnetischen Signals sowie mit einer Senderansteuerung (18, 20), mittels derer die Signale von dem Sender (12) zu vorgebbaren Sendezeitpunkten aussendbar sind, und mit einem Empfänger (16) zum Empfangen des in einem Überwachungsbereich remittierten Signals, wobei eine Auswertungseinheit (18, 22) des Sensors (200, 300, 400) dafür ausgebildet ist, in jeweils einer Messperiode (100) zu einem Sendezeitpunkt das Aussenden des Signals auszulösen und das empfangene Signal abzutasten sowie über eine Vielzahl von Messperioden (100) ein Histogramm (110, 114) von derart empfangenen Signalen zu akkumulieren, um aus dem Histogramm (110, 114) durch eine Interpolation und damit mit einer besseren zeitlichen Auflösung als diejenige des Histogramms (110, 114) den Empfangszeitpunkt und daraus die Laufzeit zu bestimmen,
**dadurch gekennzeichnet,**
**dass** die Auswertungseinheit (18, 22) dafür ausgebildet ist, die Sendezeitpunkte über die Vielzahl von Messperioden (100) gemäß einer Verteilung derart vorzugeben, dass die zeitliche Position des Empfangszeitpunkts innerhalb des Histogramms (110, 114) über die Vielzahl von Messperioden (100) variiert, so dass der Empfangszeitpunkt gezielt in verschiedenen Bins des Histogramms zu liegen kommt, wobei die Breite der Verteilung ein Vielfaches der zeitlichen Auflösung des Histogramms (110, 114) beträgt und die Verteilung der Sendezeitpunkte mit einer höheren Auflösung als der des Histogramms erfolgt.

2. Sensor (200, 300, 400) nach Anspruch 1,
wobei die Verteilung flach oder gaussisch ist.

3. Sensor (200, 300, 400) nach Anspruch 1 oder 2,
wobei die Interpolation anhand eines Funktionsfits mit einem erwarteten Signalverlauf in der Umgebung des Empfangszeitpunkts erfolgt, insbesondere durch lineare Regressionsanalyse.

4. Sensor (200, 300, 400) nach einem der vorhergehenden Ansprüche,
wobei die Auswertungseinheit (18, 22) auf einem digitalen Logikbaustein (18) implementiert ist und wobei ein analoger Vorverarbeiter (28) vorgesehen ist, über welchen das empfangene Signal (102) zu einem bipolaren vorverarbeiteten Signal (104) umwandelbar und über einen A/D-Wandler (36), insbesondere einen Binarisierer, der Auswertungseinheit (18, 22) zuführbar ist, wobei der Vorverarbeiter (28) insbesondere einen Bandpassfilter (32) oder Differenzierer zur Umwandlung des zunächst unipolaren empfangenen Signals in ein bipolares Signal aufweist.

5. Sensor (200, 300, 400) nach einem der vorhergehenden Ansprüche, wobei die Auswertungseinheit (18, 22) dafür ausgebildet ist, den Empfangszeitpunkt anhand eines Nulldurchgangs, eines Extremums oder eines Wendepunktes einer das Histogramm (110, 114) interpolierenden Funktion zu erkennen.

6. Sensor (200, 300, 400) nach einem der vorhergehenden Ansprüche, wobei die Auswertungseinheit (18, 22) dafür ausgebildet ist, mehrere Empfangszeitpunkte von Teilreflexionen und damit die Entfernungen mehrerer in derselben Richtung liegender Objekte (14) zu bestimmen.

7. Sensor (200, 300, 400) nach einem der vorhergehenden Ansprüche, wobei ein Analog/Digitalwandler (36) zur Abtastung des empfangenen Signals zur Erhöhung der Abtastrate mit mehreren Taktflanken und/oder Phasen, insbesondere zur Verdopplung mit der steigenden und der fallenden Taktflanke oder je einem um 0° und einem um 180° phasenverschobenen Takt oder zur Vervierfachung mit der steigenden und der fallenden Taktflanke je eines um 0° und um 90° phasenverschobenen Taktes oder mit je einem 0°, 90°, 180° und 270° phasenverschobenen Takt arbeitet.

8. Sensor (200, 300, 400) nach Anspruch 7,
wobei die Verteilung so gewählt ist, dass jeder Histogrammwert (116) gleich oft unter jeder Phasenverschiebung ermittelt wird, und wobei die Auswertungseinheit (18, 22) dafür ausgebildet ist, die so mehrfach ermittelten Histogrammwerte (116) unter Ausgleich der Phasenverschiebung zeitlich zur Deckung zu bringen.

9. Sensor (200, 300, 400) nach einem der vorhergehenden Ansprüche, wobei die Auswertungseinheit (18, 22) dafür ausgebildet ist, nur eine Umgebung des Empfangszeitpunkts des Histogramms (110, 114) der Interpolation zugrunde zu legen, insbesondere nur zwei, vier oder acht Werte des Histogramms (110, 114).

10. Sensor (200, 300, 400) nach Anspruch 9,
wobei die Auswertungseinheit (18, 22) dafür ausgebildet ist, die Umgebung aufzufinden, indem das Histogramm (110, 114) mit einem Korrelations-Filterkern gefaltet wird, wobei der Korrelations-Filterkern den erwarteten Histogrammverlauf um den Empfangszeitpunkt nachbildet.

11. Sensor (200, 300, 400) nach einem der vorhergehenden Ansprüche,
der als optoelektronischer Sensor (200, 300), insbesondere als Lichttaster (200) oder tastendes Lichtgitter ausgebildet ist, wobei das elektromagnetische Signal Licht, der Sender (12) ein Lichtsender und der Empfänger (16) ein Lichtempfänger ist und/oder der als entfernungsmessender Laserscanner (300) ausgebildet ist und der eine drehbare Ablenkeinheit (44, 46) aufweist, um das ausgesandte Signal periodisch über einen Abtastbereich abzulenken und/oder der als Füllstandssensor (400) nach dem Radar- oder dem TDR-Prinzip ausgebildet ist, wobei das elektromagnetische Signal ein Mikrowellensignal, der Sender (12) ein Mikrowellensender und der Empfänger (16) ein Mikrowellenempfänger ist.

12. Verfahren zur Messung von Entfernungen oder Entfernungsänderungen nach dem Signallaufzeitprinzip, wobei jeweils in einer Messperiode (100) ein elektromagnetisches Signal zu einem vorgebbaren Sendezeitpunkt ausgesandt und das nach Remission in einem Überwachungsbereich empfangene Signal abgetastet wird, wobei über eine Vielzahl von Messperioden (100) ein Histogramm (110, 114) von derart empfangenen Signalen akkumuliert und aus dem Histogramm (110, 114) durch eine Interpolation und damit mit einer besseren zeitlichen Auflösung als diejenige des Histogramms (110, 114) der Empfangszeitpunkt und daraus die Laufzeit bestimmt wird,
**dadurch gekennzeichnet,**
**dass** die Sendezeitpunkte über die Vielzahl von Messperioden (100) gemäß einer Verteilung derart vorgegeben werden, dass die zeitliche Position des Empfangszeitpunkts innerhalb des Histogramms (110, 114) über die Vielzahl von Messperioden (100) variiert, so dass der Empfangszeitpunkt gezielt in verschiedenen Bins des Histogramms zu liegen kommt, wobei die Breite der Verteilung ein Vielfaches der zeitlichen Auflösung des Histogramms (110, 114) beträgt und die Verteilung der Sendezeitpunkte mit einer höheren Auflösung als der des Histogramms (110, 114) erfolgt.

13. Verfahren nach Anspruch 12,
wobei die Verteilung flach oder gaussisch ist und/oder wobei die Interpolation anhand eines Funktionsfits mit einem erwarteten Signalverlauf in der Umgebung des Empfangszeitpunkts erfolgt, insbesondere durch lineare Regressionsanalyse.

14. Verfahren nach Anspruch 12 oder 13,
wobei die Abtastung des empfangenen Signals zur Erhöhung der Abtastrate mit mehreren Phasen erfolgt, insbesondere zur Verdopplung mit je einem um 0° und einem um 180° phasenverschobenen Takt oder zur Vervierfachung mit je einem 0°, 90°, 180° und 270° phasenverschobenen Takt, und wobei die Verteilung so gewählt ist, dass jeder Histogrammwert (116) gleich oft unter jeder Phasenverschiebung ermittelt wird, wobei die so mehrfach ermittelten Histogrammwerte (116) unter Ausgleich der Phasenverschiebung zeitlich zur Deckung gebracht werden.

15. Verfahren nach Anspruch 14,
wobei nur eine Umgebung des Empfangszeitpunkts der Interpolation mit einer Anzahl von Werten des Histogramms (110, 114) der Interpolation zugrunde gelegt werden, die einem Vielfachen des Faktors entsprechen, um welche die Abtastrate durch die mehreren Phasen erhöht wird.

## Claims

1. A sensor (200, 300, 400) for the measurement of distances or of distance changes in accordance with the signal transit time principle having a transmitter (12) for the transmission of an electromagnetic signal as well as having a transmission controller (18, 20) by means of which the signals can be transmitted by the transmitter (12) at presettable transmission times and having a receiver (16) for the reception of the signal remitted in a monitored zone, wherein an evaluation unit (18, 22) of the sensor (200, 300, 400) is configured to trigger the transmission of the signal at a transmission time in a respective measurement period (100) and to sample the received signal as well as to accumulate a histogram (110, 114) of such received signals over a plurality of measurement periods (100) to determine, by an interpolation and thus with a better time resolution than that of the histogram (110, 114), the reception time from the histogram (100, 114) and from that the transit time,
**characterized in that**
the evaluation unit (18, 22) is configured to preset the transmission times over the plurality of measurement periods (100) in accordance with a distribution such that the time position of the reception time varies within the histogram (110, 114) over the plurality of measurement periods (100), so that the reception time is intentionally in different bins of the histogram, wherein the width of the distribution is a multiple of the time resolution of the histogram (110, 114) and the distribution of the transmission times has a higher resolution than that of the histogram.

2. A sensor (200, 300, 400) in accordance with claim 1,
wherein the distribution is flat or Gaussian.

3. A sensor (200, 300, 400) in accordance with claim 1 or 2,
wherein the interpolation takes place by means of a function fit with an expected signal curve in the environment of the reception time, in particular by linear regression analysis.

4. A sensor (200, 300, 400) in accordance with any of the preceding claims,
wherein the evaluation unit (18, 22) is implemented on a digital logic module (18) and wherein an analog preprocessor (28) is provided via which the received signal (102) can be converted to a bipolar preprocessed signal (104) and can be supplied via an A/ D converter (36), in particular via a binarizer, to the evaluation unit (18, 22), wherein the preprocessor (28) in particular has a band pass filter (32) or a differentiator for the conversion of the initially bipolar received signal into a bipolar signal.

5. A sensor (200, 300, 400) in accordance with any of the preceding claims,
wherein the evaluation unit (18, 22) is configured to detect the reception time based on a zero crossing, an extreme or a point of inflection of a function interpolating the histogram (110, 114).

6. A sensor (200, 300, 400) in accordance with any of the preceding claims,
wherein the evaluation unit (18, 22) is made to determine a plurality of reception times of partial reflections and thus the distances of a plurality of objects (14) disposed in the same direction.

7. A sensor (200, 300, 400) in accordance with any of the preceding claims,
wherein an analog/digital converter (36) for the sampling of the received signal to increase the sampling rate works with a plurality of clock pulse edges and/or phases, in particular for doubling with the rising and the falling clock pulse edges or with a clock pulse phase shifted by 0° and a clock pulse phase shifted by 180° respectively, or for quadrupling with the rising and falling clock pulse edge of a respective clock pulse shifted by 0° and by 90° or with a respective clock pulse phase shifted by 0°, 90°,180° and 270° in each case.

8. A sensor (200, 300, 400) in accordance with claim 7,
wherein the distribution is selected so that each histogram value (116) is determined equally frequently under each phase shift and wherein the evaluation unit (18, 22) is made to bring the histogram values (116) thus determined multiple times into time coincidence while compensating the phase shift.

9. A sensor (200, 300, 400) in accordance with any of the preceding claims,
wherein the evaluation unit (18, 22) is made only to use an environment of the reception time of the histogram (110, 114) as the basis for the interpolation, in particular only two, four or eight values of the histogram (110, 114).

10. A sensor (200, 300, 400) in accordance with claim 9,
wherein the evaluation unit (18, 22) is made to locate the environment in that the histogram (110, 114) is folded with a correlation filter core, wherein the correlation filter core replicates the expected histogram development about the reception time.

11. A sensor (200, 300, 400) in accordance with claim any of the preceding claims,
which is made as an optoelectronic sensor (200, 300), in particular as a light sensor (200) or as a sensing light grid, wherein the electromagnetic signal is light, the transmitter (12) is a light transmitter and the receiver (16) is a light receiver and/or which is made as a distance-measuring laser scanner (300) and which has a rotatable deflection unit (44, 46) to deflect the transmitted signal periodically over a sampling region and/or is made as a fill level sensor (400) in accordance with the radar principle or the TDR principle, wherein the electromagnetic signal is a microwave signal, the transmitter (12) is a microwave transmitter and the receiver (16) is a microwave receiver.

12. A method for the measurement of distances or of distance changes in accordance with the signal transit time principle, wherein an electromagnetic signal is transmitted at a presettable transmission time in a respective measurement period (100) and the signal received after remission in a monitored zone is sampled, wherein a histogram (110, 114) of signals received in this manner is accumulated over a plurality of measurement periods (100) and the reception time and from that the transit time is determined from the histogram (110, 114) by an interpolation and thus with a better time resolution than that of the histogram (110, 114),
**characterized in that**
the transmission times are preset over the plurality of measurement periods (100) in accordance with a distribution such that the time position of the reception time varies within the histogram (100, 114) over the plurality of measurement periods (100) so that the reception time is intentionally in different bins of the histogram, wherein the width of the distribution is a multiple of the time resolution of the histogram (110, 114) and the distribution of the transmission times has a higher resolution than that of the histogram.

13. A method in accordance with claim 12,
wherein the distribution is flat or Gaussian; and/or wherein the interpolation takes place based on a function fit with an expected signal curve in the environment of the reception time, in particular by linear regression analysis.

14. A method in accordance with claim 12 or 13,
wherein the sampling of the received signal takes place for the increasing of the sampling rate with a plurality of phases, in particular for doubling with a clock pulse phase-shifted by 0° and with a clock pulse shifted by 180° respectively or for quadrupling with a respective clock pulse phase shifted by 0°, 90°, 180° and 270°; and wherein the distribution is selected such that each histogram value (116) is determined equally frequently under each phase shift, wherein the histogram values (116) determined in this manner a multiple times are brought into coincidence in time while compensating the phase shift.

15. A method in accordance with claim 14,
wherein only an environment of the reception time is used as the basis of the interpolation with a plurality of values of the histogram (110, 114) which correspond to a multiple of the factor by which the sampling rate is increased by the plurality of phases.

## Revendications

1. Capteur (200, 300, 400) pour la mesure d'éloignements ou de modifications d'éloignement d'après le principe de temps de parcours d'un signal, comprenant un émetteur (12) pour émettre un signal électromagnétique, comprenant un pilotage d'émetteur (18, 20) au moyen duquel les signaux peuvent être émis par l'émetteur (12) à des instants d'émission prédéterminés, et comprenant un récepteur (16) pour recevoir de le signal réémis dans une zone de surveillance, et une unité d'évaluation (18, 22) du capteur (200, 300, 400) est réalisée pour déclencher l'émission du signal dans une période de mesure respective (100) à un instant d'émission, et pour balayer le signal reçu et accumuler sur une pluralité de périodes de mesure (100) un histogramme (110, 114) de signaux ainsi reçus, afin de déterminer à partir de l'histogramme (110, 114), grâce à une interpolation et ainsi à une meilleure résolution temporelle que celle de l'histogramme (110, 114), l'instant de réception et à partir de celui-ci le temps de parcours,
**caractérisé en ce que**
l'unité d'évaluation (18, 22) est réalisée pour imposer les instants d'émission sur la pluralité de périodes de mesure (100) selon une répartition telle que la position temporelle de l'instant de réception à l'intérieur de l'histogramme (110, 114) varie sur la pluralité de périodes de mesure (100), de telle façon que l'instant de réception tombe de façon ciblée dans différentes cases de l'histogramme, la largeur de la répartition s'élevant à un multiple de la résolution temporelle de l'histogramme (114, 110), et la répartition des instants d'émission a lieu avec une résolution plus élevée que celle de l'histogramme.

2. Capteur (200, 300, 400) selon la revendication 1,
dans lequel la répartition est plane ou gaussienne.

3. Capteur (200, 300, 400) selon la revendication 1 ou 2,
dans lequel l'interpolation a lieu au moyen d'une adaptation fonctionnelle avec une évolution attendue du signal dans l'environnement de l'instant de réception, en particulier par analyse de régression linéaire.

4. Capteur (200, 300, 400) selon l'une des revendications précédentes,
dans lequel l'unité d'évaluation (18, 22) est mise en oeuvre sur un composant numérique logique (18), et il est prévu une unité de prétraitement analogique (28) via laquelle le signal reçu (102) peut être converti en un signal bipolaire prétraité (104) et peut être amené à l'unité d'évaluation (18, 22) via un convertisseur analogique/numérique (36), en particulier un circuit de conversion binaire, dans lequel l'unité de prétraitement (28) comprend en particulier un filtre passe-bande (32) ou un circuit de différenciation pour convertir le signal reçu tout d'abord unipolaire en un signal bipolaire.

5. Capteur (200, 300, 400) selon l'une des revendications précédentes,
dans lequel l'unité d'évaluation (18, 22) est réalisée pour reconnaître l'instant de réception au moyen d'un passage par zéro, d'un extrême ou d'un point de rebroussement d'une fonction qui interpole l'histogramme (110, 114).

6. Capteur (200, 300, 400) selon l'une des revendications précédentes,
dans lequel l'unité d'évaluation (18, 22) est réalisée pour déterminer plusieurs instants de réception de réflexions partielles et ainsi les éloignements de plusieurs objets (14) situés dans la même direction.

7. Capteur (200, 300, 400) selon l'une des revendications précédentes,
dans lequel un convertisseur analogique/numérique (36) destiné à palper le signal reçu, en vue d'augmenter le taux de palpage, fonctionne avec plusieurs flancs et/ou plusieurs phases, et en particulier pour un doublement avec le flanc montant et le flanc descendant ou encore respectivement avec un cycle en décalage de phase de 0° et un cycle en décalage de phase de 180°, ou pour un quadruplement avec le flanc montant et le flanc descendant d'un cycle en décalage de phase de 0° et d'un cycle en décalage de phase de 90°, ou avec un cycle en décalage de phase respectivement de 0°, 90°, 180° et 270°.

8. Capteur (200, 300, 400) selon la revendication 7,
dans lequel la répartition est ainsi choisie que chaque valeur d'histogramme (116) est déterminée avec la même fréquence et sous chaque décalage de phase, et dans lequel l'unité d'évaluation (18, 22) est réalisée pour amener en coïncidence temporelle les valeurs d'histogramme (116) ainsi déterminées plusieurs fois, par compensation du décalage de phase.

9. Capteur (200, 300, 400) selon l'une des revendications précédentes,
dans lequel l'unité d'évaluation (18, 22) est réalisée pour utiliser comme base de l'interpolation uniquement un environnement de l'instant de réception de l'histogramme (110, 114), en particulier uniquement deux, quatre ou huit valeurs de l'histogramme (110, 114).

10. Capteur (200, 300, 400) selon la revendication 9,
dans lequel l'unité d'évaluation (18, 22) est réalisée pour trouver l'environnement en repliant l'histogramme (110, 114) avec un noyau de filtre à corrélation, ledit noyau de filtre à corrélation reproduisant l'évolution attendue de l'histogramme autour de l'instant de réception.

11. Capteur (200, 300, 400) selon l'une des revendications précédentes, qui est réalisé comme capteur optoélectronique (200, 300), en particulier comme détecteur de lumière (200) ou comme barrière lumineuse de détection, dans lequel le signal électromagnétique est de la lumière, l'émetteur (12) est un émetteur de lumière et le récepteur (16) est un récepteur de lumière, et/ou qui est réalisé comme scanneur à laser (300) de mesure de distance et comprend une unité de déflexion rotative (44, 46) afin de faire défléchir le signal émis périodiquement sur une zone de palpage, et/ou qui est réalisé comme capteur de niveau de remplissage (400) d'après le principe radar ou le principe TDR, dans lequel le signal électromagnétique est un signal à micro-ondes, l'émetteur (12) est un émetteur de micro-ondes et le récepteur (16) est un récepteur de micro-ondes.

12. Procédé pour la mesure d'éloignements ou de modifications d'éloignement selon le principe du temps de parcours d'un signal, dans lequel on émet à chaque fois dans une période de mesure (100) un signal électromagnétique à un instant d'émission prédéterminé et on palpe le signal reçu après réémission dans une zone de surveillance, dans lequel on accumule sur une pluralité de périodes de mesure (100) un histogramme (110, 114) de signaux ainsi reçus et on détermine à partir de l'histogramme (110, 114), grâce à une interpolation et ainsi avec une meilleure résolution temporelle que celle de l'histogramme (110, 114), l'instant de réception et à partir de celui-ci le temps de parcours,
**caractérisé en ce que** les instants d'émission sont imposés sur la pluralité de périodes de mesure (100) selon une répartition telle que la position temporelle de l'instant de réception à l'intérieur de l'histogramme (110, 114) varie sur la pluralité de périodes de mesure (100) de telle façon que l'instant de réception tombe de façon ciblée dans différentes cases de l'histogramme, la largeur de la répartition s'élevant à un multiple de la résolution temporelle de l'histogramme (110, 114), et la répartition des instants d'émission a lieu avec une résolution plus élevée que celle de l'histogramme (110, 114).

13. Procédé selon la revendication 12,
dans lequel la répartition est plane ou gaussienne, et/ou dans lequel l'interpolation a lieu au moyen d'une adaptation fonctionnelle avec une évolution attendue du signal dans l'environnement de l'instant d'émission, en particulier par analyse avec régression linéaire.

14. Procédé selon la revendication 12 ou 13,
dans lequel le palpage du signal reçu a lieu, pour augmenter le taux de palpage, avec plusieurs phases, en particulier en vue du doublage avec respectivement un cycle en décalage de phase de 0° et un cycle en décalage de phase de 180°, ou en vue du quadruplement avec un cycle respectivement en décalage de phase de 0', 90°, 180° et 270°, et dans lequel la répartition est ainsi choisie que chaque valeur d'histogramme (116) est déterminée à la même fréquence pour chaque décalage de phase, et les valeurs d'histogramme (116) ainsi déterminées plusieurs fois sont amenées en coïncidence temporelle par compensation du décalage de phase.

15. Procédé selon la revendication 14, dans lequel
dans lequel on utilise pour l'interpolation uniquement un environnement de l'instant de réception avec un certain nombre de valeurs de l'histogramme (110, 114) qui correspondent à un multiple du facteur à raison duquel on augmente le taux de palpage à travers les plusieurs phases.
